(19) Europäisches Patentamt

European Patent Office

Office européen des brevets

(11) **EP 1 684 065 A1**

(12) **EUROPÄISCHE PATENTANMELDUNG**

(43) Veröffentlichungstag:
26.07.2006 Patentblatt 2006/30

(51) Int Cl.:
*G01N 25/18* (2006.01)    *G01K 7/12* (2006.01)

(21) Anmeldenummer: 06001225.9

(22) Anmeldetag: **20.01.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **24.01.2005  DE 102005003249**

(71) Anmelder: **Testo AG**
**79853 Lenzkirch (DE)**

(72) Erfinder: **Rombach, Martin**
**79853 Lenzkirch (DE)**

(74) Vertreter: **Schmuckermaier, Bernhard**
**Westphal - Mussgnug & Partner**
**Mozartstrasse 8**
**80336 München (DE)**

(54) **Vorrichtung zur Ermittlung des U-Werts**

(57)    Die Erfindung betrifft eine Vorrichtung zur Bestimmung des U-Werts einer Wand (10) mit einer inneren Wandoberfläche (22) und einer äußeren Wandoberfläche (32) gemäß dem formelmäßigen Zusammenhang k = $\alpha_i$ ($T_{Li}$ - $T_{Wi}$) / ($T_{Li}$ - $T_{La}$) bzw. k = $\alpha_a$ ($T_{Wa}$ - $T_{La}$)/($T_{Li}$ - $T_{La}$), wobei mit wenigstens einem Thermoelement (40, 40', 40" ) direkt die Differenztemperatur [($T_{Li}$ - $T_{Wi}$) bzw. ($T_{Wa}$ - $T_{La}$)] zwischen der Wandoberflächentemperatur ($T_{Wi}$, $T_{Wa}$) und der entsprechenden Lufttemperatur ($T_{Li}$, $T_{La}$) auf einer Seite der Wand (20, 30) bestimmt wird.

FIG 2

**Beschreibung**

Die Erfindung betrifft eine Vorrichtung zur Ermittlung des U-Werts.

Der Wärmedurchgangskoeffizient, auch U-Wert genannt, ist ein Maß für den Wärmestrom pro Flächeneinheit und pro Grad Kelvin Temperaturunterschied zwischen der Innen- und der Außenseite einer Wand. Je kleiner der U-Wert ist, desto geringere Wärmeverluste treten auf.

Der U-Wert ist insbesondere bei der Isolierung und Wärmedämmung von Gebäuden von Bedeutung und hängt wesentlich von den verwendeten Baumaterialien, insbesondere von deren Wärmeleitfähigkeit und deren Bauteildicke, sowie von den Wärmeübergängen zwischen den verschiedenen Materialien ab.

Der Wärmestrom durch eine Wand wird durch Wärmeübergang auf den beiden Seiten der Wand und durch Wärmeleitung innerhalb der Wand bestimmt und lässt sich folgendermaßen bestimmen:

$$Q = k \ (T_{Li} - T_{La}) = \alpha_i \ ( \ T_{Li} - T_{Wi}) = \alpha_a \ (T_{Wa} - T_{La})$$

Dabei werden folgende Abkürzungen verwendet:

| | |
|---|---|
| Q | Wärmestrom |
| k | U-Wert |
| $T_{Li}$ | Lufttemperatur innen |
| $T_{La}$ | Lufttemperatur außen |
| $T_{wi}$ | Wandtemperatur innen |
| $T_{wa}$ | Wandtemperatur außen |
| $\alpha_i$ | Wärmeübergangskoeffizient innen |
| $\alpha_a$ | Wärmeübergangskoeffizient außen |

Der U-Wert lässt sich somit folgendermaßen bestimmen:

$$k = \alpha_a \ (T_{Wa} - T_{La}) / (T_{Li} - T_{La})$$

bzw.:

$$k = \alpha_i \ (T_{Li} - T_{Wi}) / (T_{Li} - T_{La})$$

Zur Bestimmung des U-Wertes einer Wand ist somit eine Oberflächentemperaturmessung, d. h. entweder der Innenwand oder der Außenwand, sowie zwei Lufttemperaturmessungen, nämlich der Lufttemperaturen innen und außen, und die Kenntnis des entsprechenden Wärmeübergangskoeffizienten $\alpha_i$ bzw. $\alpha_a$ vonnöten.

In die Berechnung geht die Differenz der Lufttemperaturen ein, welche in der Regel vergleichsweise groß ist, insbesondere mehrere Grad Kelvin beträgt. Die Schwierigkeit liegt in der genauen Bestimmung der Lufttemperatur und der entsprechenden Wandtemperatur, da die Differenzen zwischen diesen beiden Temperaturen in der Regel sehr klein sind und beispielsweise weniger als 1 Grad Kelvin betragen.

Gemäß dem Stand der Technik werden zur Temperaturmessung (entweder außen oder innen) zwei Temperaturfühler verwendet, welche jeweils die Temperatur der Wandoberfläche oder der zugehörigen Luft erfassen. Dabei kann jedoch jeder Temperaturfühler einen Messfehler von beispielsweise +/- 0,3 °K bei Verwendung von Pt100 Sensoren der Klasse B aufweisen, wodurch sich bei der Berechnung der Differenztemperatur ein Fehler von bis zu 0,6 °K ergeben könnte. Da sich wie bereits ausgeführt die zu bestimmenden Temperaturen jedoch nur um wenige oder gar nur um 1 °K unterscheiden können, führt ein derartig großer Fehler in der Temperaturbestimmung zu einer mit einem extrem großen Fehler behafteten Bestimmung des U-Werts. Weitere Ungenauigkeiten in der Bestimmung des U-Werts können sich durch einen unzureichenden Wärmeübergang von der Wandoberfläche zum Sensorelement des Oberflächenfühlers bei der Bestimmung der Wandtemperatur ergeben.

Die Aufgabe der Erfindung liegt nunmehr darin, eine Vorrichtung zur möglichst genauen und mit einem geringen Fehler behafteten Ermittlung des U-Werts anzugeben.

Diese Aufgabe wird durch eine Vorrichtung mit den Merkmalen des Patentanspruchs 1 gelöst.

Vorteilhafte Ausführungen und Weiterbildungen der Erfindung sind in den Unteransprüchen angegeben.

Die erfindungsgemäße Vorrichtung zur Bestimmung des U-Werts einer Wand mit einer äußeren Wandoberfläche (Wa) und einer inneren Wandoberfläche (Wi) gemäß dem formelmäßigen Zusammenhang $k = \alpha_a(T_{Wa} - T_{La})/(T_{Li} - T_{La})$ bzw. $k = \alpha_i (T_{Li} - T_{Wi})/(T_{Li} - T_{La})$ bestimmt mit wenigstens einem Thermoelement direkt die Differenztemperatur zwischen der Wandoberflächentemperatur und der entsprechenden Lufttemperatur [$(T_{Li} - T_{Wi})$ bzw. $(T_{Wa} - T_{La})$] auf einer Seite der Wand. Ein Thermoelement weist zwei Thermoelementdrähte bestehend aus unterschiedlichen Materialien auf. Die beiden Kontaktstellen bilden eine aktive Seite, welche die auf die Wandoberfläche aufgebracht wird, und eine passive Seite, auch Vergleichsstelle genannt, welche der umgebenden Luft ausgesetzt ist. Durch die unterschiedlichen Temperaturen wird in dem Thermoelement eine Spannung erzeugt, die proportional zur Differenz der Temperaturen an der aktiven und der passiven Seite des Thermoelements ist. Der Fehler bei der Differenztemperaturbestimmung ist deutlich geringer als bei Bestimmung der absoluten Temperaturen und anschließender Differenzberechnung und kann beispielsweise in der Größenordnung von etwa 0,1 °K liegen.

Bei einer bevorzugten Ausgestaltung der Erfindung wird mit einem ersten Temperaturfühler die entsprechende Lufttemperatur ($T_{Li}$ bzw. $T_{La}$) absolut bestimmt. Wie aus der oben angegebenen Formel zur Berechnung des U-Werts hervorgeht, muss zusätzlich zur Differenztemperatur zwischen Lufttemperatur und der entsprechenden Wandtemperatur die Lufttemperatur auch absolut bestimmt werden. Dazu wird ein separater Temperaturfühler verwendet. Vorzugsweise kann dazu der bei einem Thermoelement in der Regel vorhandene Temperaturfühler, welcher sonst zur Vergleichstellentemperaturmessung benötigt wird, verwendet werden.

Da weiterhin auch die Lufttemperatur auf der anderen Seite der Wand, auf welcher keine Differenztemperatur ermittelt wird, gemessen werden muss, um den U-Wert bestimmen zu kommen, wird vorzugsweise mit einem zweiten Temperaturfühler die absolute Lufttemperatur auf der anderen Seite der Wand bestimmt.

Vorzugsweise ist der zweite Temperaturfühler als Funkfühler ausgebildet. Damit kann die auf der anderen Seite der Wand ermittelte Lufttemperatur direkt an den Sensor bzw. an das zugehörige Messgerät auf der Seite der Wand, auf welcher auch die Differenztemperatur ermittelt wird, gefunkt und zur Bestimmung des U-Werts herangezogen werden.

In einer besonders bevorzugten Ausgestaltung der Erfindung ist wenigstens ein Thermoelement mittels einer Knetmasse auf der äußeren bzw. inneren Wandoberfläche befestigt. Die Knetmasse dient dazu, die aktive Stelle des Thermoelements auf der Wandoberfläche zu halten, den Kontakt zwischen dem Thermoelement und der Wandoberfläche, insbesondere auch bei schwierig zu vermessenden Wandoberflächen wie z. B. Rauputzen, sicherzustellen und so für einen guten Wärmeübergang zwischen der Wandoberfläche und dem Thermoelement zu sorgen. Weiterhin schützt die Knetmasse die Kontaktstelle vor Temperaturschwankungen, beispielsweise durch Konvektion einer in der Nähe befindlichen Heizung. Knetmasse hat weiterhin die Vorteile, dass sie dauerelastisch ist und nicht austrocknet, so dass sie oft wieder verwendet werden kann.

Vorzugsweise weist die Knetmasse einen geringen Wärmeleitkoeffizienten von weniger als 1 W/m$^2$K, bevorzugt von weniger als 0,5 W/m$^2$K, auf. Damit ist eine gute Isolierung der Kontaktstelle des Thermoelements mit der Wandoberfläche gegenüber der Umgebungsluft gewährleistet.

Vorteilhafterweise ist die Knetmasse nahezu rückstandsfrei von der äußeren bzw. inneren Wandoberfläche lösbar. Mit einer derartigen Knetmasse kann das Thermoelement an einer Wand befestigt werden, um die Messwerte zur Bestimmung des U-Werts unter optimalen Bedingungen aufzunehmen, wobei anschließend jedoch die Knetmasse und das Thermoelement ohne Spuren auf der Wandoberfläche zu hinterlassen von der Wand abgelöst werden können. Insbesondere bei einer Messwertaufnahme im Innenraum von Gebäuden werden so Beschädigungen der Tapeten oder sonstigen Wandverkleidungen vermieden.

Bei einer bevorzugten Weiterbildung der Erfindung ist das wenigstens eine Thermoelement an ein datenspeicherndes Messgerät angeschlossen. Die Messwertaufnahme zur Bestimmung des U-Werts dauert in der Regel einige Stunden oder sogar einige Tage. Dazu ist insbesondere ein Gleichgewichtszustand der Wand vonnöten, so dass die Messwertaufnahme nicht kurz nach oder während eines Wetterumschwungs durchgeführt werden sollte. Um zuverlässig den Wärmestrom durch die Wand bestimmen zu können, ist dabei ein Erfassen der Messwerte in kleinen Zeitabständen, beispielsweise im Abstand von wenigen Minuten oder sogar Sekunden, über einen längeren Zeitraum von mehreren Stunden oder Tagen nötig, so dass eine große Menge an Messdaten registriert werden muss. Dazu dient das datenspeichernde Messgerät, welches wenigstens die Messdaten des Thermoelements, gegebenenfalls auch die Daten des ersten und/oder des zweiten Thermofühlers, welche die absoluten Lufttemperaturen im Innen- und Außenraum (auf beiden Seiten der Wand) bestimmen, erfasst und speichert, um anschließend eine elektronische Auswertung der erfassten Daten zu ermöglichen.

Bei einer vorteilhaften Ausgestaltung der Erfindung werden wenigstens drei, vorzugsweise genau drei, in Serie geschaltete Thermoelemente zur Bestimmung des U-Werts verwendet. Die Verwendung von mehreren Thermoelementen, welche in geringfügigem Abstand zueinander angeordnet sind, weist den Vorteil einer besseren Statistik auf, da die von den unterschiedlichen Thermoelementen erfassten Daten gemittelt werden können. Ein weiterer Vorteil beim Einsatz von mehreren in Serie geschalteten Thermoelementen liegt in dem größeren Messsignal, welches einfacher und genauer ausgewertet werden kann und zusätzlich geringere Anforderungen an die Messwertaufbereitung im Messgerät stellt. Dabei ist die Verwendung von drei Thermoelementen in der Regel ausreichend, um einerseits die Kosten für die erfindungsgemäße Vorrichtung möglichst gering zu halten, andererseits jedoch einen Bereich von einigen, beispielsweise 10 bis 20, Quadratzentimetern auf der zu vermessenden Wand abzudecken und über diesen Bereich mitteln zu können.

Die Erfindung wird anhand der folgenden Figuren ausführlich erläutert. Es zeigt:

Figur 1    eine schematische Darstellung eines charakteristischen Temperaturverlaufs an einer Wand,

Figur 2    eine schematische Darstellung eines ersten Ausführungsbeispiels der Erfindung und

Figur 3    eine schematische Darstellung eines zweiten Ausführungsbeispiels der Erfindung.

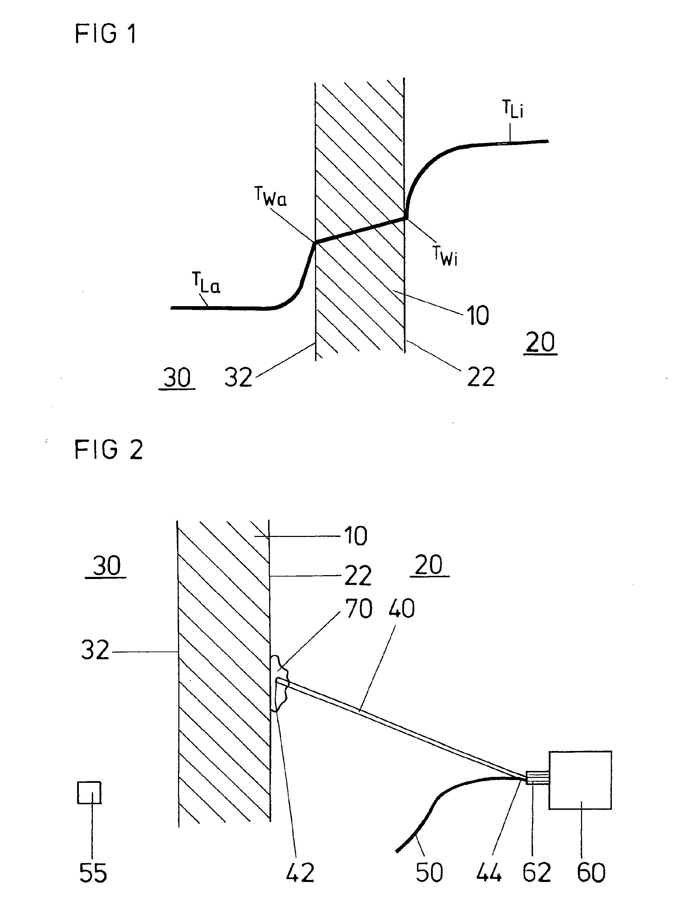

Figur 1 zeigt einen Querschnitt durch eine Wand 10 mit einer inneren Wandoberfläche 22, welche an einen Innenraum 20 angrenzt, und einer äußeren Wandoberfläche 32, welche an einen Außenraum 30 angrenzt.

Die Wand 10 weist auf der inneren Wandoberfläche 22 eine Temperatur $T_{wi}$ und auf der äußeren Wandoberfläche 32 eine Temperatur $T_{wa}$ auf. Der Innenraum 20 weist eine Lufttemperatur $T_{Li}$ und der Außenraum 30 eine Lufttemperatur $T_{La}$ auf.

Herrscht im Außenraum 30 eine geringere Lufttemperatur $T_{La}$ als im Innenraum 20, ist die Temperatur $T_{wa}$ an der äußeren Wandoberfläche 32 bereits größer als die Lufttemperatur $T_{La}$ im Außenraum 30. Die Temperatur steigt im Innern der Wand 10 bei einem homogenen Material linear an, so dass die Temperatur $T_{wi}$ an der inneren Wandoberfläche 22 über der Temperatur $T_{wa}$ an der äußeren Wandoberfläche 32 liegt. Die Lufttemperatur $T_{Li}$ im Innenraum 20 ist nochmals geringfügig größer als die auf der inneren Wandoberfläche 22 herrschende Temperatur $T_{wi}$.

Beispielsweise können die unterschiedlichen Temperaturen folgende Werte annehmen:

Luftinnentemperatur $T_{Li}$: 22,2 °C
Wandinnentemperatur $T_{wi}$: 19,9 °C
Wandaußentemperatur $T_{wa}$: 10,7 °C
Luftaußentemperatur $T_{La}$: 10,0 °C

Zur Erfassung zumindest eines Teils dieser Temperaturen und des sich daraus ergebenden U-Werts wird erfindungsgemäß die in Figur 2 dargestellte Vorrichtung verwendet.

Die erfindungsgemäße Vorrichtung weist ein Thermoelement 40 mit einer aktiven Stelle 42 und einer passiven Stelle 44 auf, welches über einen Fühlerstecker 62 an eine Bedieneinheit 60 angeschlossen ist. Mit dem Thermoelement 40 kann direkt die Differenz zwischen der Luftinnentemperatur $T_{Li}$ und der Wandinnentemperatur $T_{wi}$ gemessen werden, ohne dass eine absolute Temperaturmessung vonnöten ist. Der Fehler der ermittelten Temperaturdifferenz ist daher kleiner als 0,1 °K.

Die Bestimmung des U-Wertes erfordert in der Regel eine Aufnahme von Messwerten, also Temperaturwerten, über mehrere Stunden, gegebenenfalls auch über mehrere Tage. Um zuverlässige Aussagen über den Wärmedurchgangskoeffizienten einer Außenwand eines Gebäudes treffen zu können, sollte auch das Wetter berücksichtigt werden und die Messungen nicht kurz nach oder während eines Wetterumschwungs durchgeführt werden, da ansonsten beispielsweise die Luftaußentemperatur $T_{La}$ bereits deutlich abgekühlt sein könnte, die äußere Wandoberfläche 32 jedoch noch Wärme gespeichert hat, so dass die Wandaußentemperatur $T_{wa}$ deutlich höher als bei der entsprechenden Luftaußentemperatur $T_{La}$ erwartet liegt. Um die großen Mengen an von dem Thermoelement 40 registrierten Daten verarbeiten zu können, ist die Bedieneinheit 60 bevorzugt als ein datenspeicherndes Messgerät ausgebildet oder mit einem derartigen Messgerät verbunden. Somit können die von dem Thermoelement 40 registrierten Daten direkt elektronisch hinterlegt und anschließend elektronisch ausgewertet werden.

Die aktive Stelle 42 des Thermoelements 40 ist mittels einer Knetmasse 70 auf der inneren Wandoberfläche 22 der Wand 10 befestigt und gegen mögliche Konvektionsströmungen, die die Temperaturmessung beeinflussen könnten, isoliert. Dazu weist die Knetmasse 70 einen Wärmeübergangskoeffizienten von beispielsweise weniger als 1 W/m²K, bevorzugt von weniger als 0,5 W/m²K, auf. Nach Durchführung der Messungen kann die Knetmasse von der inneren Wandoberfläche 22 entfernt werden, ohne Rückstände auf der inneren Wandoberfläche 22 zu hinterlassen.

Zur Ermittlung des U-Wertes gemäß obiger Formel werden zusätzlich die Luftinnentemperatur $T_{Li}$ und die Luftaußentemperatur $T_{La}$ benötigt. Zur Ermittlung der Luftinnentemperatur $T_{Li}$ weist die erfindungsgemäße Vorrichtung einen Temperaturfühler 50 auf, dessen freies Ende an einer beliebigen Stelle im Innenraum 20 angeordnet ist. Beispielsweise handelt es sich bei dem Temperaturfühler 50 um einen auf einem NTC-Widerstand basierenden Temperatursensor, einen Pt100 Sensor oder einen Pt1000 Sensor.

Der Temperaturfühler 50 kann separat von dem Thermoelement 40 angeordnet sein. Bevorzugt handelt es sich bei dem Temperaturfühler 50 um den bei einem Thermoelement in der Regel vorhandenen Sensor zur Vergleichstellentemperaturmessung, welcher ebenfalls über den Fühlerstecker 62 an die Bedieneinheit 60 angeschlossen ist. Somit können alle zur Ermittlung der Temperaturen im Innenraum 20 notwendigen Sensoren über einen Anschluss, nämlich den Fühlerstecker 62, an die Bedieneinheit 60 angeschlossen werden.

Vorzugsweise werden auch die von dem Temperaturfühler 50 ermittelten Luftinnentemperaturen $T_{Li}$ an das datenspeichernde Messgerät weitergegeben, um anschließend direkt zur Auswertung der Messdaten und zur Ermittlung des U-Werts der Wand 10 bereitzustehen.

Zur abschließenden Berechnung des U-Werts ist weiterhin die Luftaußentemperatur $T_{La}$ vonnöten. Diese wird mit einem zweiten Temperaturfühler 55, welcher sich im Außenraum 30 befindet, ermittelt. Bei dem Temperaturfühler 55 kann es sich ebenfalls um einen Temperatursensor basierend auf einem NTC-Widerstand, einen Pt100 Sensor oder einen Pt1000 Sensor handeln. Bevorzugt ist der Temperaturfühler 55 als Funkfühler ausgebildet, um die ermittelten Luftaußentemperaturen $T_{La}$ direkt an die Bedieneinheit 60 funken zu können. Es kann jedoch auch eine beliebige andere Verbindung zur Übermittlung der registrierten Daten des zweiten Temperaturfühlers 55 mit der Bedieneinheit 60 gewählt werden. Bevorzugt werden auch die von dem zweiten Temperaturfühler 55 ermittelten Luftaußentemperaturen $T_{La}$ in dem datenspeichernden Messgerät erfasst.

In einer nicht dargestellten Ausführungsvariante kann das Thermoelement 40 auch an der Außenwand 32 der Wand 10 angeordnet sein, um die Differenz zwischen der Luftaußentemperatur $T_{La}$ und der Wandaußentemperatur $T_{wa}$ zu messen. Die weiteren Temperaturfühler 50, 55 sind dann jeweils auf der anderen Seite der Wand 10 angeordnet.

Die verbesserte Bestimmung des U-Wertes der Wand 10 mit der erfindungsgemäßen Vorrichtung soll anhand der folgenden Werte nochmals verdeutlicht werden.

Die Luftinnentemperatur $T_{Li}$ beträgt 22°C, die Wandinnentemperatur $T_{wi}$ beträgt 21°C und die Luftaußentemperatur $T_{La}$ beträgt 11,8°C. Der innere Wärmeübergangskoeffizient $\alpha_i$ einer Außenwand beträgt 7,69 W/m²K. Wären die Temperaturwerte $T_{Li}$, $T_{wi}$ und $T_{La}$ ohne einen Fehler behaftet, ergäbe sich der U-Wert folgendermaßen:

$$k = 7,69 \text{ W/m}^2\text{K} * (22°C - 21°C)/(22°C - 11,8°C)$$
$$= 7,69 \text{ W/m}^2\text{K} * 1,0°C/10,2°C$$
$$= 0,75 \text{ W/m}^2\text{K}$$

Bei einer Bestimmung der Temperaturwerte $T_{Li}$, $T_{Wi}$ und $T_{La}$ mit den Temperatursensoren gemäß dem Stand der Technik sind die Luftinnentemperatur $T_{Li}$ und die Wandinnentemperatur $T_{wi}$ mit einem Fehler von maximal etwa 0,3°C behaftet. Der U-Wert könnte somit fälschlicherweise zu folgendem Wert berechnet werden:

$$k = 7,69 \text{ W/m}^2\text{K} * 0,4°C/10,2°C$$
$$= 0,30 \text{ W/m}^2\text{K}$$

Erfindungsgemäß wird die Differenz zwischen der Luftinnentemperatur $T_{Li}$ und die Wandinnentemperatur $T_{Wi}$ direkt mit dem Thermoelement 40 bestimmt, ohne die Absoluttemperaturen zu bestimmten. Dabei tritt ein Fehler von maximal 5 % durch die Bestimmung der Thermoelementspannung und zusätzlich ein Fehler von maximal 5 % durch einen Wärmeableitfehler auf. Der U-Wert lässt sich somit unter Berücksichtigung sämtlicher Fehler zu folgendem Wert bestimmen:

$$k = 7,69 \text{ W/m}^2\text{K} * 0,9°C/10,2°C$$
$$= 0,69 \text{ W/m}^2\text{K}$$

Wie sofort ersichtlich, kommt dieser Wert dem tatsächlichen U-Wert von 0,75 W/m²K deutlich näher als der mit den Sensoren gemäß dem Stand der Technik ermittelte Wert.

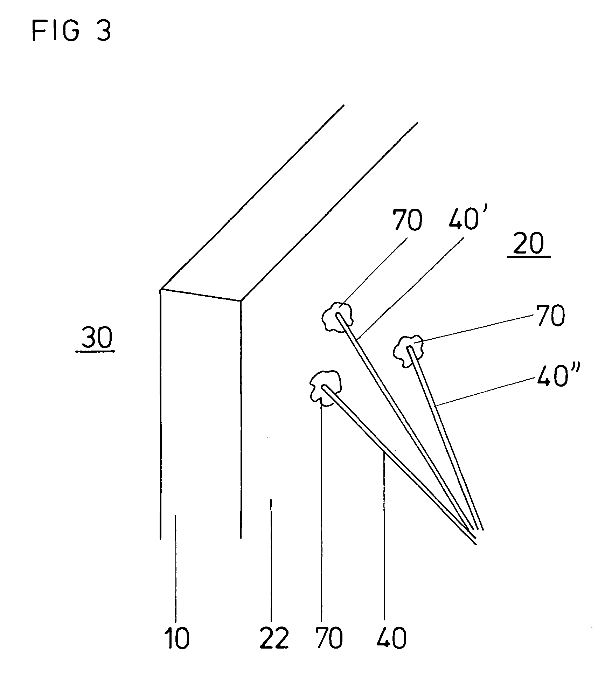

In Figur 3 ist ein weiteres Ausführungsbeispiel der erfindungsgemäßen Vorrichtung dargestellt. Gleiche Teile wie in dem ersten Ausführungsbeispiel sind mit gleichen Bezugsziffern bezeichnet. Im wesentlichen unterscheidet sich das zweite Ausführungsbeispiel dadurch, dass drei Thermoelemente 40, 40', 40'' , welche in Serie geschaltet sind, zur Bestimmung der Differenztemperatur zwischen der Luftinnentemperatur $T_{Li}$ und der Wandinnentemperatur $T_{wi}$ herangezogen werden. Bevorzugt sind die drei Thermoelemente 40, 40', 40" über den einen Fühlerstecker 62 an die Bedieneinheit 60 angeschlossen.

Die drei Thermoelemente 40, 40', 40" sind wiederum mit der Knetmasse 70 an der inneren Wandoberfläche 22 befestigt. Dabei werden die aktiven Stellen 42, 42', 42'' beispielsweise an den Spitzen eines gleichschenkligen Dreiecks mit der Seitenlänge 3 cm angeordnet. Die von den Thermoelementen 40, 40', 40" erfassten Differenztemperaturen werden gemittelt, um eine bessere Statistik zu erzielen.

Bezugszeichenliste

| 10 | Wand |
|----|------|
| 20 | Innenraum |
| 22 | innere Wandoberfläche |
| 30 | Außenraum |
| 32 | äußere Wandoberfläche |
| 40 | Thermoelement |
| 40' | Thermoelement |
| 40" | Thermoelement |
| 42 | aktive Stelle |
| 42' | aktive Stelle |
| 42" | aktive Stelle |
| 44 | passive Stelle |
| 50 | Temperaturfühler |
| 55 | Temperaturfühler |
| 60 | Bedieneinheit |
| 62 | Fühlerstecker |
| 70 | Knetmasse |

**Patentansprüche**

1. Vorrichtung zur Bestimmung des U-Werts einer Wand (10) mit einer inneren Wandoberfläche (22) und einer äußeren Wandoberfläche (32) gemäß dem formelmäßigen Zusammenhang k $=\alpha_i (T_{Li} - T_{Wi})/(T_{Li} - T_{La})$ bzw. k $=\alpha_a (T_{Wa} - T_{La})/(T_{Li} - T_{La})$
   **dadurch gekennzeichnet, dass** mit wenigstens einem Thermoelement (40, 40', 40") direkt die Differenztemperatur $[(T_{Li} - T_{wi})$ bzw. $(T_{wa} - T_{La})]$ zwischen der Wandoberflächentemperatur ($T_{wi}$, $T_{wa}$) und der entsprechenden Lufttemperatur ($T_{Li}$, $T_{La}$) auf einer Seite der Wand (20, 30) bestimmt wird.

2. Vorrichtung nach Anspruch 1,
   **dadurch gekennzeichnet, dass** mit einem ersten Temperaturfühler (50) die entsprechende Lufttemperatur ($T_{Li}$ bzw. $T_{La}$) absolut bestimmt wird.

3. Vorrichtung nach Anspruch 1 oder 2, **dadurch gekennzeichnet, dass** mit einem zweiten Temperaturfühler (55) die absolute Lufttemperatur ($T_{La}$ bzw. $T_{Li}$) auf der anderen Seite der Wand (30, 20) bestimmt wird.

4. Vorrichtung nach Anspruch 3,
   **dadurch gekennzeichnet, dass** der zweite Temperaturfühler (55) als Funkfühler ausgebildet ist.

5. Vorrichtung nach einem der vorhergehenden Ansprüche,
   **dadurch gekennzeichnet, dass** das wenigstens eine Thermoelement (40, 40', 40") mittels einer Knetmasse (70) auf der äußeren bzw. inneren Wandoberfläche (22 bzw. 32) befestigt ist.

6. Vorrichtung nach Anspruch 5,
   **dadurch gekennzeichnet, dass** die Knetmasse (70) einen geringen Wärmeübergangskoeffizienten von weniger als 1 W/m$^2$K, bevorzugt von weniger als 0,5 W/m$^2$K, aufweist.

7. Vorrichtung nach Anspruch 5 oder 6,
**dadurch gekennzeichnet, dass** die Knetmasse (70) nahezu rückstandsfrei von der äußeren bzw. inneren Wandoberfläche (22, 32) lösbar ist.

8. Vorrichtung nach einem der vorhergehenden Ansprüche,
**dadurch gekennzeichnet, dass** das wenigstens eine Thermoelement (40, 40', 40'') an ein datenspeicherndes Messgerät angeschlossen ist.

9. Vorrichtung nach einem der Ansprüche 2 bis 8,
**dadurch gekennzeichnet, dass** der erste und/oder der zweite Temperaturfühler (50, 55) an das datenspeichernde Messgerät angeschlossen sind.

10. Vorrichtung nach einem der vorhergehenden Ansprüche,
**dadurch gekennzeichnet, dass** wenigstens drei, vorzugsweise genau drei, in Serie geschaltete Thermoelemente (40, 40', 40'') zur Bestimmung des U-Werts verwendet werden.

FIG 1

$T_{Li}$

$T_{Wa}$

$T_{Wi}$

$T_{La}$

10

20

30    32    22

FIG 2

10

30    22    20

32

70  40

42    50  44  62  60

55

FIG 3

**Europäisches Patentamt**

## EUROPÄISCHER RECHERCHENBERICHT

Nummer der Anmeldung

EP 06 00 1225

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 364 676 A (OJA ET AL) 21. Dezember 1982 (1982-12-21) * das ganze Dokument * ----- | 1-10 | INV. G01N25/18 ADD. G01K7/12 |
| A | US 2 878 669 A (KNUDSON WARREN A ET AL) 24. März 1959 (1959-03-24) * Spalte 2, Zeilen 5-14 * * Spalte 3, Zeilen 43-57 * * Spalte 5, Zeilen 1-10 * ----- | 1,8-10 | |
| A | GB 533 399 A (THE BRITISH THOMSON-HOUSTON COMPANY, LIMITED) 12. Februar 1941 (1941-02-12) * Seite 1, Zeilen 10-40 * * Seite 2, Zeile 119 - Seite 3, Zeile 4 * ----- | 1,10 | |

RECHERCHIERTE SACHGEBIETE (IPC)

G01K
G01N

Der vorliegende Recherchenbericht wurde für alle Patentansprüche erstellt

| Recherchenort | Abschlußdatum der Recherche | Prüfer |
|---|---|---|
| Den Haag | 23. Mai 2006 | de Bakker, M |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

.......................................................................................................

& : Mitglied der gleichen Patentfamilie, übereinstimmendes
   Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 06 00 1225

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

23-05-2006

| Im Recherchenbericht angeführtes Patentdokument | | Datum der Veröffentlichung | Mitglied(er) der Patentfamilie | | Datum der Veröffentlichung |
|---|---|---|---|---|---|
| US 4364676 | A | 21-12-1982 | CA | 1150528 A1 | 26-07-1983 |
| | | | DE | 3066042 D1 | 09-02-1984 |
| | | | EP | 0025049 A1 | 18-03-1981 |
| | | | FI | 800783 A | 17-09-1980 |
| | | | JP | 56500149 T | 12-02-1981 |
| | | | NO | 803434 A | 14-11-1980 |
| | | | SE | 427502 B | 11-04-1983 |
| | | | SE | 7902378 A | 17-09-1980 |
| | | | WO | 8001954 A1 | 18-09-1980 |
| US 2878669 | A | 24-03-1959 | KEINE | | |
| GB 533399 | A | 12-02-1941 | KEINE | | |

EPO FORM P0461

Für nähere Einzelheiten zu diesem Anhang : siehe Amtsblatt des Europäischen Patentamts, Nr.12/82